# FASCICULE DE BREVET EUROPEEN

(11) **EP 1 544 481 B1**
(45) Date de publication et mention de la délivrance du brevet: **19.04.2006**
(21) Numéro de dépôt: 04300883.8
(22) Date de dépôt: 13.12.2004
(51) Int. Cl.: F16B 33/00, F16B 43/00, F16B 5/02, F16J 15/12

(54) **Tôle comportant des moyens de fixation à un support et un joint d'étanchéité**
Blechteil, das Mittel für Befestigung an einem Tragteil und einer Dichtung enthält
Metal sheet comprising means for fixing to a support and a seal

(30) Priorité: 16.12.2003 FR 0314772
(43) Date de publication de la demande: 22.06.2005
(73) Titulaire: SNECMA, 75015 Paris (FR); Techspace Aero, 4041 Milmort - Herstal (BE)
(72) Inventeur: Rémy, Christophe, B-4347 Fexhe-le-haut-Clocher (BE); Mahy, Frédéric, 77950 Maincy (FR)
(74) Mandataire: David, Daniel

(56) Documents cités:
- GB-A- 811 718
- US-A- 4 957 403
- US-B1- 6 536 775

## Description

L'invention concerne la fixation d'une tôle à un support, en particulier la fixation d'une tôle formant capot d'une pièce balayée par un fluide, telle qu'un bras d'un turboréacteur (US-B1-6 536 775).

Un turboréacteur comprend des bras pour relier des éléments entre eux, par exemple de liaison ou de support de carters, de passage et de protection de canalisations de fluides ou de câbles électriques. Chaque bras comporte un capot de bras, généralement réalisé par un assemblage de pièces matricées ou usinées, formant des portions de tôles, vissées à un support du bras, par exemple une semelle supportant le bras.

Le capot de bras constitue tout ou partie de l'enveloppe extérieure du bras. S'il est disposé à l'intérieur d'une veine de gaz, il ne doit pas en gêner l'écoulement. En particulier, les têtes des vis de fixation du capot au support ne doivent pas faire saillie hors de la surface extérieure du capot. En outre, la fixation du capot de bras à son support doit être faite de façon étanche. Cette fixation doit également permettre un démontage aisé du capot.

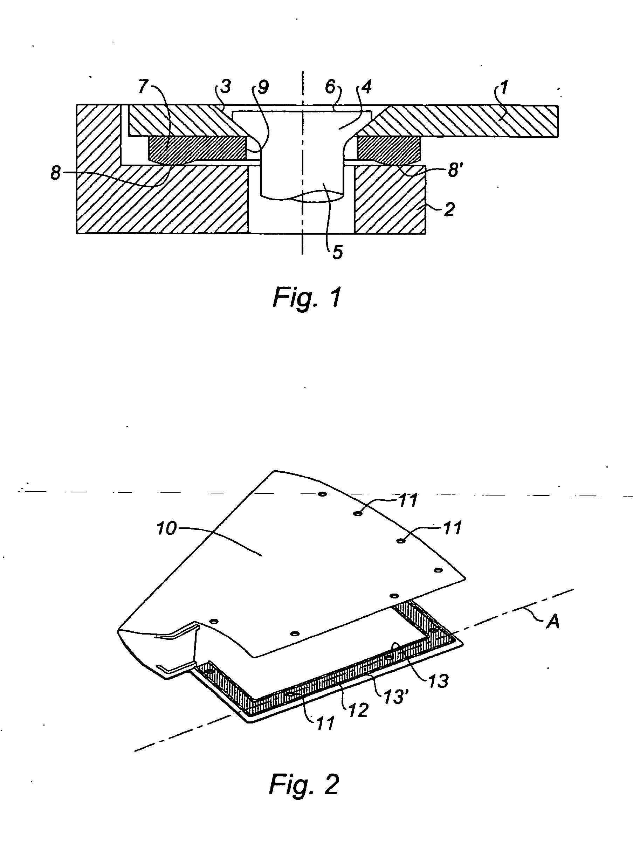

La figure 1 représente une vue partielle en coupe d'un capot de bras ou de tout autre élément de capotage 1 de l'art antérieur, fixé sur un support 2. Le capot de bras 1 est généralement constitué d'un ensemble de pièces en aluminium, le support 2 étant en acier. Le capot 1 comprend une série de lumières 3 de passage de vis de fixation au support 2, le long de sa périphérie. Chaque lumière 3 est réalisée par fraisage dans l'épaisseur des pièces en aluminium, de façon à recevoir une vis 4, comportant une tige 5 et une tête plate 6 à surface tronconique. Chaque lumière 3 est conformée de façon à ce qu'une fois la vis 4 en position de fixation, sa tête 6 ne fasse point saillie hors de la surface extérieure du capot 1.

Un joint 7, de matière élastomère, est disposé entre les deux surfaces en appui mutuel, le long de la périphérie du capot 1. Ce joint 7 se présente sous la forme d'une bande, comportant deux bourrelets latéraux internes 8, 8' et est percé de lumières 9 de passage des vis 4, correspondant aux lumières 3 du capot 1. Le joint 7 assure l'étanchéité de la fixation du capot 1 au support 2.

Cette forme de réalisation de la fixation du capot de bras 1 à son support 2 présente des inconvénients. Tout d'abord, le capot 1 doit être d'une épaisseur suffisante pour contenir la tête 6 de la vis 4 sans que celle-ci ne dépasse. Cette obligation de non dépassement de la tête de vis 6 hors de la surface extérieure du capot 1 impose généralement une très faible portée de la partie tronconique de la tête de vis 6 dans la lumière 3. Un mauvais positionnement et vissage de la vis 4 associé à un serrage non maîtrisé peut provoquer le passage de la vis 4 au travers du capot 1 et la détérioration de ce dernier. En outre, lors du vissage de la vis 4, la compression du joint 7 n'est pas maîtrisée, ce qui ne permet pas d'assurer un montage homogène du capot 1 sur son support 2 et peut autoriser une déformation du capot 1 aux abords des points de vissage des vis 4. Enfin, l'assemblage de pièces en aluminium forme un capot 1 extrêmement rigide, dont le montage et le démontage n'est pas aisé.

La présente invention vise à pallier ces inconvénients.

A cet effet, l'invention concerne une tôle comportant des moyens de fixation à un support, un joint d'étanchéité agencé le long de ces moyens, caractérisée par le fait que les moyens de fixation comprennent au moins une lumière pratiquée sur la tôle par emboutissage avec une cavité de réception d'une tête d'un élément de fixation correspondant à une portion de tôle faisant saillie sur la face opposée et une rondelle de reprise d'efforts entre la tôle et le support sur ladite portion faisant saillie.

La cavité de réception d'une tête d'un élément de fixation obtenue par emboutissage peut contenir une tête d'un élément de fixation de dimension plus grande que l'épaisseur de la tôle, en particulier une tête de vis dont la partie tronconique est de portée plus grande que l'épaisseur de la tôle. La longueur de guidage de l'élément de fixation dans la cavité de réception est également plus importante. En outre, la rondelle de reprise d'efforts permet de maîtriser la compression du joint et le matage sur la tôle et son support.

Avantageusement, la rondelle est solidaire du joint.

Avantageusement dans ce cas, la rondelle est intégrée au joint lors du moulage de ce dernier.

De préférence, la rondelle comporte au moins une oreille percée d'un trou de réception de matière du joint.

Dans la forme de réalisation préférée de l'invention le joint est de matière élastomère et la rondelle est métallique.

L'invention s'applique particulièrement à un capot de bras d'un turboréacteur, mais la demanderesse n'entend pas limiter la portée de ses droits à cette application.

Grâce à la cavité de réception d'une tête d'un élément de fixation de dimension plus grande que l'épaisseur de la tôle, il est possible de former le capot avec une tôle plus mince que dans l'art antérieur. Cette tôle étant plus souple, il est possible de la monter et de la démonter même si le capot est formé d'une seule pièce par cette tôle. Il est donc possible, grâce à l'invention, de former le capot avec une tôle d'une seule pièce.

Dans la description, on se place le long d'un bord de la tôle. Ainsi, par axial et transversal, on entend axial et transversal par rapport à l'axe du bord de la tôle, au point du bord considéré. La tôle est agencée pour être fixée sur un support. Par interne ou externe, on entend vers l'intérieur ou l'extérieur, en considérant l'intérieur situé du côté du support par rapport à la tôle.

L'invention sera mieux comprise grâce à la description suivante de la forme de réalisation préférée de la tôle de l'invention, en référence au dessin annexé, sur lequel :
- la figure 1 représente une vue en coupe partielle transversale d'un capot de bras d'un turboréacteur de l'art antérieur fixé sur un support ;
- la figure 2 représente une vue en perspective de la forme de réalisation préférée de la tôle de l'invention formant capot de bras de turboréacteur ;
- la figure 3 représente une vue en coupe transversale de la forme de réalisation préférée de la tôle de l'invention, vissée sur un support ;
- la figure 4 représente une vue en coupe transversale éclatée de la tôle et du support de la figure 3, et
- la figure 5 représente une vue en perspective du joint et de la rondelle de la forme de réalisation préférée de la tôle de l'invention.

L'invention est décrite ici en relation avec une tôle formant capot de bras d'un turboréacteur.

En référence à la figure 2, un capot de bras 10 de turboréacteur comprend une tôle métallique repliée ouverte au niveau de toutes ses faces latérales, sauf au niveau de celle correspondant au pliage. La tôle 10 est agencée pour être fixée à un support par vissage au travers de lumières 11 réparties le long des bords non pliés du capot 10. Un joint d'étanchéité 12, ici de matière élastomère, est collé le long des bords de la tôle 10 comportant les lumières 11. Ce joint 12 se présente sous la forme d'une bande, parallèle aux bords de la tôle 10 auxquels elle est collée. Il comprend, sur toute sa longueur, deux bourrelets latéraux 13, 13' faisant saillie vers l'intérieur.

La suite de la description sera faite en relation avec un bord particulier de la tôle 10, rectiligne, le long duquel est collé un joint 12 s'étendant suivant un axe A.

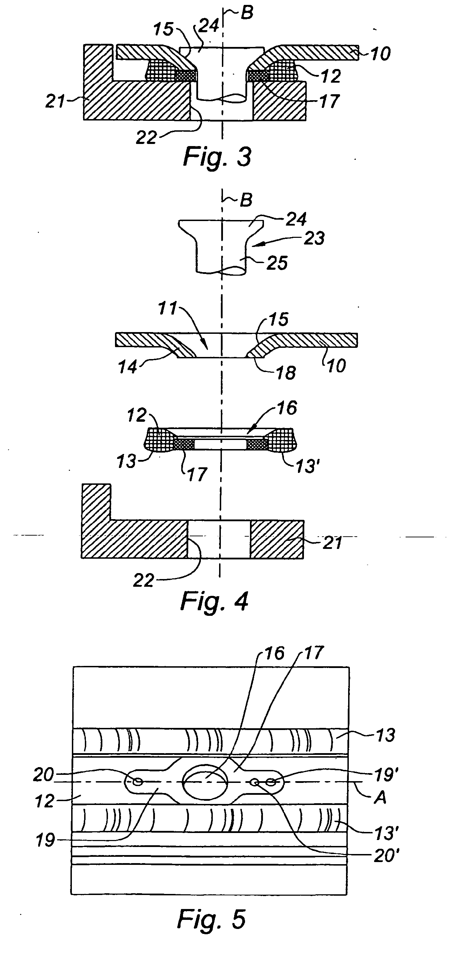

En référence aux figures 3 et 4, chaque lumière 11 est réalisée par emboutissage de la tôle 10. De ce fait, la tôle 10 présente, autour de chaque lumière 11, une zone de tôle circulaire déformée 14, présentant une cavité sur une face correspondant à une portion faisant saillie sur l'autre face. Sa formation est liée, par exemple, à l'action d'un poinçon d'emboutissage sur la tôle 10 dans une matrice, qui outre percer la lumière 11, forme cette zone en relief dans le sens de sa course.

La zone emboutie 14 fait saillie sur la face de la tôle 10 tournée vers le support et ménage, sur sa face opposée, une cavité de réception d'une tête de vis 15. La surface de cette cavité 15 est globalement de forme tronconique. Elle s'étend, dans la direction de l'axe B de la lumière 11, perpendiculaire à la surface globale de la tôle 10 dans cette région, selon une profondeur supérieure à celle de l'épaisseur de la tôle, du fait de la déformation de la zone 14.

Vis à vis de chaque lumière 11 de la tôle 10, le joint 12 comporte une lumière 16 correspondante. A l'intérieur de cette lumière 16 est intégrée une rondelle métallique 17, du côté interne du joint 12.

La rondelle métallique 17 est intégrée de façon solidaire au joint 12. Pour ce faire, elle est avantageusement directement insérée dans le moule de formation du joint 12. Ainsi, lorsque la matière élastomère, injectée dans le moule à l'état visqueux, passe de cet état à l'état souple final, la rondelle est prise dans la masse et en reste solidaire.

En référence à la figure 5, afin d'assurer la cohésion de l'ensemble formé par le joint 12 et la rondelle 17, cette dernière comprend deux oreilles 19, 19', chacune percée d'un trou 20, 20', respectivement, opposées sur la rondelle 17. Lorsque la rondelle 17 est intégrée au joint, les oreilles 19, 19' sont disposées suivant l'axe A du joint 12. Lors de l'injection de la matière élastomère dans son moule, cette dernière, à l'état visqueux, pénètre dans les trous 20, 20' des oreilles 19, 19', puis se solidifie, les oreilles 19, 19' étant ainsi solidarisées au joint 12.

Il peut être prévu un troisième perçage, non numéroté ici, sur une oreille 19, 19' de la rondelle 17, qui est un perçage de positionnement de la rondelle 17 dans le moule d'injection, utile pour positionner et orienter la rondelle 17 juste avant le moulage du joint 12.

La rondelle 17 est ainsi collée au joint 12 sur une partie de sa surface externe, sur ses surfaces latérales, sur une partie de sa surface interne, au niveau des bourrelets 13, 13', et dans les trous 20, 20' des oreilles 19, 19'. La rondelle 17 est donc solidaire du joint 12, ce qui facilite grandement le montage du joint 12 et des rondelles 17 sur la tôle 10 et évite la perte de la rondelle 17. Le caractère monobloc de l'ensemble formé par la tôle 10, le joint 12 et les rondelles 17 facilite grandement le montage et démontage du capot de bras lors d'entretiens moteur par exemple.

Les surfaces internes et externes de la rondelle métallique 17 s'étendent, au moins partiellement, à l'intérieur de l'espace de la lumière 16 ménagée dans le joint 12.

Le joint 12 est collé, autour de sa lumière 16, sur la face interne de la zone emboutie 14 de la tôle 10. Le bord en saillie 18 de la zone emboutie 14 de la tôle 10 est agencé, par exemple par reprise mécanique, pour présenter une surface perpendiculaire à l'axe B de la lumière 11. La zone emboutie 14 de la tôle 10, le joint 12 et la rondelle 17 sont dimensionnés de façon à ce que, lorsque le joint 12 et la rondelle 17 sont collés sur la tôle 10, le bord en saillie 18 de la zone 14 de la tôle 10 soit au contact de la rondelle métallique 17.

Ainsi, après collage du joint 12 et des rondelles 17 sur la tôle 10, cette dernière comprend une série de lumières de passage de vis 11, chaque lumière étant entourée sur la face externe d'une cavité de réception d'une tête de vis 15, et sur la face interne d'une rondelle métallique 17 et du joint 12.

En particulier, lorsque la tôle 10 est posée sur un support 21 pour y être fixée, il ne peut y avoir de contact entre la tôle 10 et le support 21, en raison de l'interposition de la rondelle 17 et du joint 12. Cela est avantageux car le support est dans un métal différent de celui de la tôle et il faut éviter une contrainte de matage trop importante sur la tôle 10 et le support 21.

La fixation de la tôle 10 au support 21 est effectuée de façon classique. La tôle 10 est placée sur le support 21, de façon à ce que chaque lumière 11 de la tôle se situe au droit d'un alésage 22 du support 21 de réception d'une vis 23. Chaque vis 23 comporte une tête 24 et une tige 25. La tige 25 d'une vis 23 est introduite à travers la lumière de la tôle 10 et la rondelle 17, dans l'alésage 22 du support 21. Elle est vissée et sa tête 24 vient en appui sur la surface de réception d'une tête de vis 15 de la tôle 10 de forme complémentaire, sa tête ne dépassant pas de la surface de la tôle 10 une fois la vis 23 vissée.

Lors du vissage, les bourrelets 13, 13' du joint 12 sont compressés entre la tôle 10 et le support 21, jusqu'à ce que la rondelle métallique 17 vienne en appui sur la surface externe du support 21. Ainsi, la rondelle 17 remplit une double fonction, de maîtrise de la compression du joint 12, celle-ci étant stoppée par l'appui de la rondelle 17 sur la surface extérieure du support 21, et de reprise d'efforts entre la tôle 10 et le support 21. La fonction de reprise d'efforts est assurée du fait que la rondelle 17 offre une surface de contact avec le support 21 plus grande que celle du bord en saillie 18 de la zone déformée 14 de la tôle 10 ; la pression de vissage est ainsi répartie sur cette surface. Le joint 12 compressé assure en outre une fonction d'étanchéité entre la tôle 10 et le support 21.

La tôle de l'invention a été décrite en relation avec une fixation par vissage. Il va de soi que l'invention peut s'appliquer à toute tôle agencée pour être fixée à un support par l'intermédiaire d'un élément de fixation comportant une tête et une tige, et en particulier à toute tôle formant un élément de capotage aérodynamique.

Les oreilles de la rondelle de la tôle de l'invention peuvent ou non être de la même épaisseur que le reste de la rondelle. Chaque oreille peut également être scindée en deux oreilles, interne et externe.

## Revendications

1. Tôle (10) comportant des moyens de fixation à un support (21), un joint (12) d'étanchéité agencé le long de ces moyens, **caractérisée par le fait que** les moyens de fixation comprennent au moins une lumière (11) pratiquée sur la tôle par emboutissage avec une cavité de réception d'une tête d'un élément de fixation (15) correspondant à une portion de tôle (14) faisant saillie sur la face opposée et une rondelle (17) de reprise d'efforts entre la tôle (10) et le support (21) sur ladite portion (14) faisant saillie.

2. Tôle (10) selon la revendication 1, dans laquelle l'élément de fixation est une vis (23).

3. Tôle (10) selon l'une des revendications 1 ou 2, dans laquelle la rondelle (17) est solidaire du joint (12).

4. Tôle (10) selon la revendication 3, dans laquelle la rondelle (17) est intégrée au joint (12) lors du moulage de ce dernier.

5. Tôle (10) selon la revendication 4, dans laquelle la rondelle (17) comporte au moins une oreille (19, 19') percée d'un trou (20, 20') de réception de matière du joint (12).

6. Tôle (10) selon l'une des revendications 1 à 5, dans laquelle le joint (12) est de matière élastomère.

7. Tôle (10) selon l'une des revendications 1 à 6, dans laquelle la rondelle (17) est métallique.

8. Capot de bras d'un turboréacteur, comportant au moins une tôle (10) selon l'une des revendications 1 à 7.

9. Capot de bras d'un turboréacteur selon la revendication 8, constitué d'une seule pièce par la tôle (10).

## Patentansprüche

1. Blech (10), umfassend Mittel zur Befestigung an einem Träger (21), eine Dichtung (12), die entlang dieser Mittel angeordnet ist, **dadurch gekennzeichnet, dass** die Befestigungsmittel mindestens ein Langloch (11) umfassen, das auf dem Blech durch Tiefziehen hergestellt wurde, mit einer Vertiefung zur Aufnahme eines Kopfes eines Befestigungselementes (15), das einem Teil des Bleches (14) entspricht, das auf der gegenüberliegenden Seite übersteht und eine Unterlegscheibe (17) zur Aufnahme von Kräften zwischen dem Blech (10) und dem Träger (21) auf dem besagten Teil (14), der übersteht.

2. Blech (10) gemäß Anspruch 1, bei dem das Befestigungselement eine Schraube (23) ist.

3. Blech (10) gemäß einem der Ansprüche 1 oder 2, bei dem die Unterlegscheibe (17) fest mit der Dichtung (12) verbunden ist.

4. Blech (10) gemäß Anspruch 3, bei dem die Unterlegscheibe (17) in der Dichtung (12) integriert ist, während letztere abgeformt wird.

5. Blech (10) gemäß Anspruch 4, bei dem die Unterlegscheibe (17) mindestens eine Öse (19, 19') umfasst, in die ein Loch (20, 20') zur Aufnahme des Dichtungsmaterials (12) gebohrt wurde.

6. Blech (10) gemäß einem der Ansprüche 1 bis 5, bei dem die Dichtung (12) aus Elastomer besteht.

7. Blech (10) gemäß einem der Ansprüche 1 bis 6, bei dem die Unterlegscheibe (17) aus Metall besteht.

8. Kappe des Armes eines Turbinentriebwerks, das mindestens ein Blech (10) gemäß einem der Ansprüche 1 bis 7 umfasst.

9. Kappe des Armes eines Turbinentriebwerks gemäß Anspruch 8, bestehend aus einem einzigen Teil pro Blech (10).

## Claims

1. A metal sheet (10) including means for fixing to a support (21), a seal gasket (12) laid out along these means, **characterized by** the fact that the fixing means comprise at least one lumen (11) provided on the metal sheet by punching, with a cavity for receiving a head of a fixing component (15) corresponding to a metal sheet portion (14) protruding on the opposite face and a washer (17) for transferring stresses between the metal sheet (10) and the support (21) on said protruding portion (14).

2. The metal sheet (10) according to claim 1, wherein the fixing component is a screw (23).

3. The metal sheet (10) according to any of claims 1 or 2, wherein the washer 17 is integral with the gasket (12).

4. The metal sheet (10) according to claim 3 wherein the washer (17) is integrated into the gasket (12) during the molding thereof.

5. The metal sheet (10) according to claim 4 wherein the washer (17) includes at least one lug (19, 19') perforated with a hole (20, 20') for receiving material from the gasket (12).

6. The metal sheet (10) according to any of claims 1 to 5, wherein the gasket (12) is in elastomeric material.

7. The metal sheet (10) according to any of claims 1 to 6, wherein the washer (17) is in metal.

8. A turbojet engine strut cowl, including at least one metal sheet (10) according to any of claims 1 to 7.

9. The turbojet engine strut cowl, according to claim 8, formed by the metal sheet (10) as a single piece.
